(19) Europäisches Patentamt

European Patent Office

Office européen des brevets

(11) **EP 4 190 482 B1**

(12) **EUROPEAN PATENT SPECIFICATION**

(45) Date of publication and mention
of the grant of the patent:
**21.05.2025  Bulletin 2025/21**

(21) Application number: **21850065.0**

(22) Date of filing: **29.07.2021**

(51) International Patent Classification (IPC):
**B29C 59/16** (2006.01)      **B29C 59/02** (2006.01)
**B23K 26/352** (2014.01)    **B23K 26/0622** (2014.01)
**B23K 26/364** (2014.01)    **B23K 26/402** (2014.01)
**E03C 1/20** (2006.01)        B23K 101/18 (2006.01)
**B23K 103/00** (2006.01)

(52) Cooperative Patent Classification (CPC):
**B23K 26/364; B23K 26/0624; B23K 26/402;
B29C 59/16;** B23K 2101/18; B23K 2103/42;
B29C 2059/023; B29K 2995/0093

(86) International application number:
**PCT/JP2021/028159**

(87) International publication number:
**WO 2022/025205 (03.02.2022 Gazette 2022/05)**

(54) **RESIN MOLDED ARTICLE, METHOD FOR PRODUCING RESIN MOLDED BODY, AND WET-AREA EQUIPMENT.**

HARZFORMARTIKEL, HERSTELLUNGSVERFAHREN FÜR HARZFORMARTIKEL UND WASSERABSCHNITTSAUSRÜSTUNG

ARTICLE MOULÉ EN RÉSINE, PROCÉDÉ DE FABRICATION D'ARTICLE MOULÉ EN RÉSINE ET ÉQUIPEMENT DE COUPE HYDRAULIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.07.2020  JP 2020129948**

(43) Date of publication of application:
**07.06.2023  Bulletin 2023/23**

(73) Proprietor: **Panasonic Intellectual Property
Management Co., Ltd.
Osaka-shi, Osaka 540-6207 (JP)**

(72) Inventors:
• **MURATA, Atsushi**
  **Osaka-shi, Osaka 540-6207 (JP)**
• **NAKAMURA, Akifumi**
  **Osaka-shi, Osaka 540-6207 (JP)**

(74) Representative: **Appelt, Christian W.
Boehmert & Boehmert
Anwaltspartnerschaft mbB
Pettenkoferstrasse 22
80336 München (DE)**

(56) References cited:
WO-A1-2015/021192      JP-A- 2004 188 436
JP-A- 2018 176 743      JP-A- 2019 188 605
JP-A- 2019 188 605

## Description

[Technical Field]

The present invention relates to a resin molded body, a method for producing the resin molded body, and wet-area equipment.

[Background Art]

For example, among resin molded bodies, a resin molded body that exhibits liquid repellency by having a plurality of rib projections formed on its surface, and having a fluorine coating applied to a distal end surface of each of the rib projections is known. Each of the rib projections includes a wider distal end portion than a base end portion (see JP 2019 188605 A, for example).

WO 2015/021192 A1 describes a medical device, which includes a portion made from a base material having a surface adapted for contact with biological material, and wherein the surface is modified to become superhydrophobic, superoleophobic, or both, using only the base material, excluding non-material coatings. The surface may be modified using a subtractive process, an additive process, or a combination thereof. The product of the process may form part of an implantable device or a medical instrument, including a medical device or instrument associated with an intraocular procedure. The surface may be modified to include micrometer- or nanometer-sized pillars, posts, pits or cavitations; hierarchical structures having asperities; or posts/pillars with caps having dimensions greater than the diameters of the posts or pillars.

[Summary of Invention]

[Technical Problem]

Here, with prolonged use, liquid repellency of the resin molded body deteriorates due to deterioration of the fluorine coat. Furthermore, there is a risk that small droplets could enter between the rib projections, resulting in deterioration of liquid repellency.

Hence, an object of the present invention is to provide a resin molded body and the like having high liquid repellency.

[Solution to Problem]

In order to achieve the above-described object, the present invention relates to a resin molded body according to claim 1, a method according to claim 5, and a wet-area equipment according to claim 7. Claims 2 to 4 refer to specifically advantageous realizations of the resin molded body according to claim 1. Claim 6 refers to a specifically advantageous realization of the method according to claim 5.

A resin molded body according to an aspect of the present invention includes the features recited in claim 1.

Furthermore, a method for producing the resin molded body according to an aspect of the present invention is a method for producing the resin molded body that includes forming the uneven structure surface by performing laser processing on a surface of a resin base material.

Wet-area equipment according to an aspect of the present invention includes the above-described resin molded body.

[Advantageous Effects of Invention]

The present invention can provide a resin molded body and the like having high liquid repellency.

[Brief Description of Drawings]

Embodiments 1 and 2 as described below are not encompassed by the wording of the claims but are considered as useful for understanding the invention.

[FIG. 1]

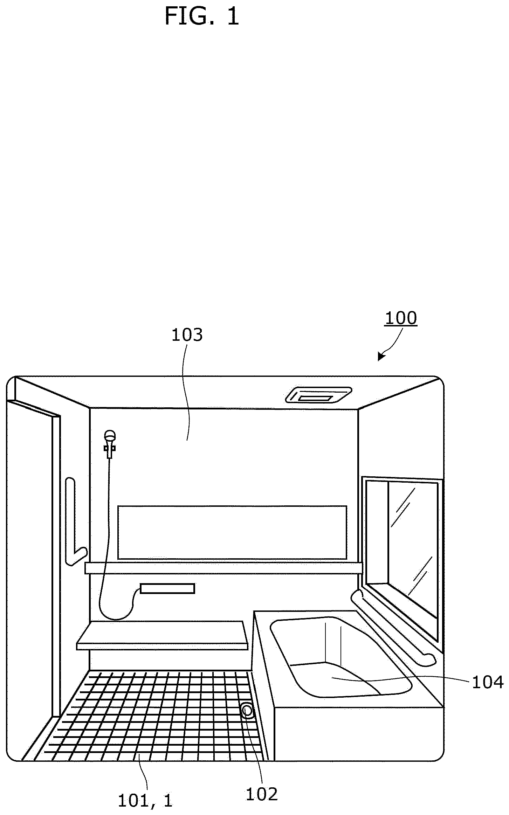

FIG. 1 is a perspective view illustrating a bathroom in which a resin molded body according to Embodiment 1 is used.
[FIG. 2]

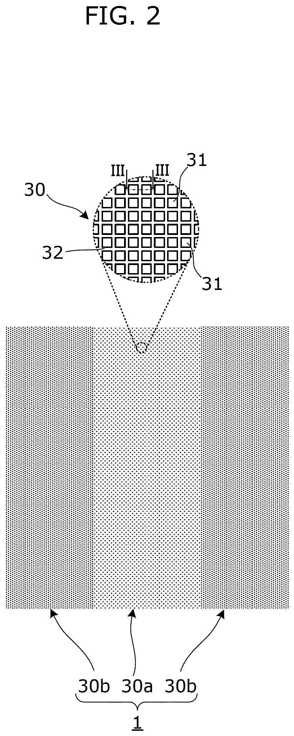

FIG. 2 is a plan view illustrating an enlarged view of a surface structure of a floor according to Embodiment 1.

[FIG. 3]

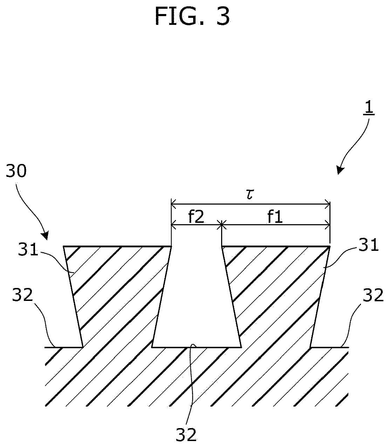

FIG. 3 is a cross-sectional view taken along line III-III in FIG. 2.
[FIG. 4]

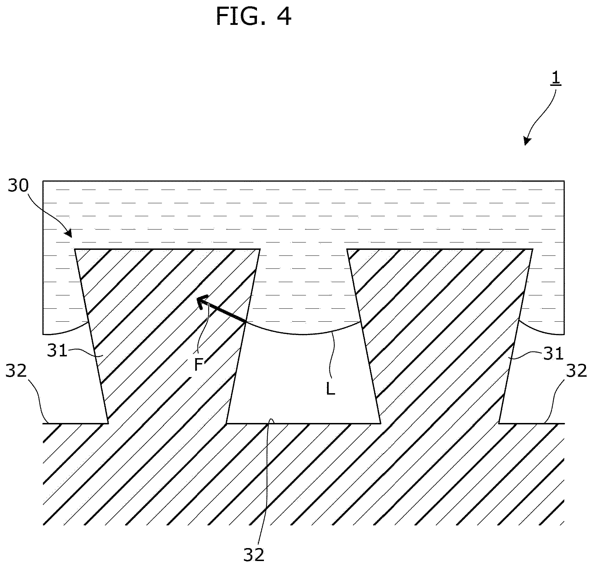

FIG. 4 is a cross-sectional view illustrating a state in which a droplet enters between a pair of adjacent projections according to Embodiment 1.
[FIG. 5]

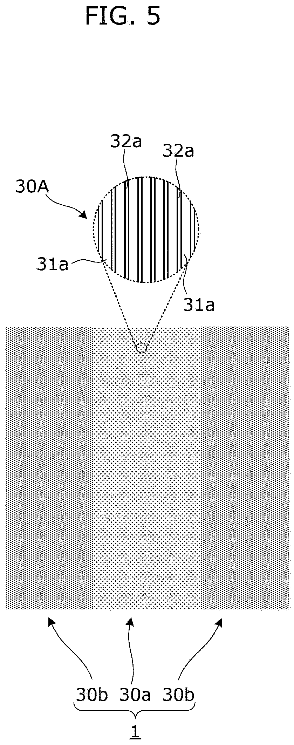

FIG. 5 is a plan view illustrating an uneven structure surface according to Embodiment 2.
[FIG. 6]

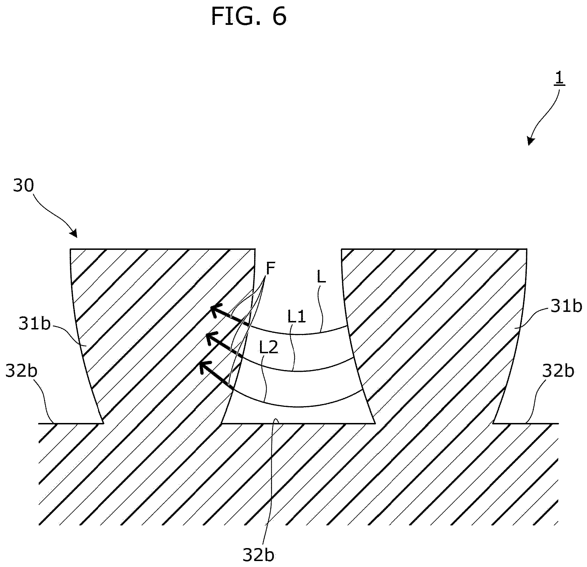

FIG. 6 is an enlarged cross-sectional view of peripheral surfaces of projections according to Embodiment 3.

[Description of Embodiments]

Hereinafter, a resin molded body will be described in detail with reference to the drawings. Embodiment 1 and embodiment 2 are not encompassed by the wording of the claims but are considered as useful to understand the invention. The scope of the invention is defined by the appended claims.

It should be noted that the respective figures are schematic diagrams and are not necessarily precise illustrations. Accordingly, for example, the scaling, etc., depicted in the figures is not necessarily accurate. Additionally, in the figures, elements that are substantially the same are given the same reference signs, and overlapping descriptions thereof are omitted or simplified.

Additionally, in the present Description, terms indicating relations between elements, such as 'parallel' or 'orthogonal'; terms indicating shapes of elements, such as 'square' or 'rectangle'; and numerical ranges are not strictly defined and include a substantially same range or a margin of error of a few percent.

[Embodiment 1]

[Resin Molded Body]

First, an example of an application of resin molded body 1 according to Embodiment 1 will be described with reference to FIG. 1. FIG. 1 is a perspective view illustrating bathroom 100 in which resin molded body 1 according to Embodiment 1 is used.

As shown in FIG. 1, bathroom 100 is an example of wet-area equipment and includes floor 101 including drain outlet 102, wall 103, and bathtub 104. Although it is sufficient that at least one of floor 101, wall 103, or bathtub 104 is formed using resin molded body 1, the present embodiment describes, as an example, a case where floor 101 is formed using resin molded body 1.

FIG. 2 is a plan view illustrating an enlarged view of a surface structure of floor 101 according to Embodiment 1. FIG. 3 is a cross-sectional view taken along line III-III in FIG. 2.

As shown in FIG. 2 and FIG. 3, a surface of resin molded body 1 is uneven structure surface 30 that has a so-called reentrant structure. Uneven structure surface 30 exhibits liquid repellency by having a plurality of projections 31 and a plurality of recesses 32 alternately arranged in a predetermined direction in a planar form.

Specifically, uneven structure surface 30 includes the plurality of projections 31 arranged in a matrix in a plan view. Each of projections 31 is substantially square in a plan view. Projections 31 are substantially the same in shape. Each of projections 31 is in a shape in which a distal end portion is larger than a base portion. Specifically, the distal end portion is larger than the base portion of projection 31 when viewed in an axial direction of projection 31. For example, each of projections 31 is formed in the shape of an inverted truncated square pyramid.

The portions between the plurality of projections 31 in the predetermined direction form recesses 32. Although it can be said that there is a single recess 32 because recess 32 is in a lattice shape and continuous as a whole, it can also be said that there are a plurality of recesses 32 because recess 32 is separated by projections 31 when viewed only in the predetermined direction. In other words, the plurality of recesses 32 and the plurality of projections 31 are alternately arranged at a predetermined pitch in both a lengthwise direction and a crosswise direction.

As shown in FIG. 3, the sum of width f1 of projection 31 and width f2 of recess 32 in the predetermined direction is the predetermined pitch ($\tau$=f1+f2). Width f1 is the width of the distal end of projection 31. Width f2 is the width of the distal end of recess 32, that is, the width between the distal ends of a pair of adjacent projections 31. Width f1 and width f2 are of nanometer order or micrometer order. Uneven structure surface 30 can be made into a water-repellent surface by setting predetermined pitch $\tau$, width f1, and width f2 so as to satisfy a specific relation. For example, uneven structure surface 30 can be made into a water-repellent surface by satisfying a relation in which $\theta'$ is a value in a range of water repellency in equation (1).

$$\cos\theta' = -1 + 1/D\{(\pi - \theta)\cos\theta + \sin\theta\} \cdots (1)$$

In equation (1), $D = \tau/f1$. $\theta$ denotes the static pure-water contact angle on a base material that forms uneven structure surface 30. $\theta'$ denotes the static pure-water contact angle on uneven structure surface 30 itself. In the present embodiment, simulation using equation (1) is performed to thereby determine width f1 of projection 31 and width f2 of recess 32 in such a way that $\theta'$ will be greater than 120°. As long as this relation is satisfied, the uneven structure may be non-uniform in uneven structure surface 30. For example, first area 30a and a pair of second areas 30b are provided in uneven structure surface 30. First area 30a and second area 30b have mutually different predetermined pitches $\tau$. The pair of second areas 30b are arranged so that first area 30a is sandwiched therebetween in a crosswise direction. First area 30a and second area 30b are areas that exhibit static pure-water contact angles that are mutually different by at least 5°. In the present embodiment, width f1 of projection 31 and width f2 of recess 32 are determined based on equation (1) so that the static pure-water contact angle on first area 30a is 121°. On the other hand, width f1 of projection 31 and width f2 of recess 32 are determined based on equation (1) so that the static pure-water contact angle on second area 30b is 150°. Accordingly, since first area 30a and second area 30b exhibit mutually different static pure-water contact angles, droplets can be gathered from second area 30b to first area 30a that exhibits a comparatively low static pure-water contact angle. When a plurality of droplets are gathered into one drop, the drop easily slides off due to its increased weight, and thus the liquid repellency of uneven structure surface 30 can be enhanced.

Here, when the static pure-water contact angle on first area 30a and the static pure-water contact angle on second area 30b are mutually different by at least 5°, droplets can be gathered smoothly from second area 30b that exhibits a high static pure-water contact angle to first area 30a that exhibits a low static pure-water contact angle. In particular, in the present embodiment, since the static pure-water contact angle on first area 30a and the static pure-water contact angle on second area 30b are mutually different by 30°, droplets can be gathered more smoothly to first area 30a.

Furthermore, as described above, each of projections 31 is in the shape of an inverted truncated square pyramid in which the distal end portion is larger than the base portion. Therefore, the peripheral surface of each of projections 31 is in a shape that widens toward the distal end portion. In other words, the peripheral surface of projection 31 is in a shape in which the distance from the central axis to the edge of projection 31 gradually increases from the base portion toward the distal end portion.

FIG. 4 is a cross-sectional view illustrating a state in which droplet L enters between a pair of adjacent projections 31 according to Embodiment 1. As shown in FIG. 4, when droplet L enters between the pair of adjacent projections 31, surface tension causes droplet L in recess 32 to be shaped to protrude toward the bottom surface of recess 32. In droplet L in the above-described state, force F is generated along the tangent line of the surface of droplet L, on the peripheral surface of projection 31. Because force F is a force toward the distal end portion of projection 31, droplet L in recess 32 tends to move toward the distal end portion of projection 31 due to force F. Specifically, since droplet L does not come down any further in recess 32, it withstands external factors such as external pressure and vibration, and thus high liquid repellency is exhibited and/or maintained.

[Method for Producing Resin Molded Body]

Next, a method for producing resin molded body 1 will be described.

First, a base material in a board-like shape is prepared. The base material can be formed from any resin, as long as laser processing can be performed thereon. Examples of resin on which laser processing can be performed include thermoplastic resins. Examples of the thermoplastic resins include: polyolefin resins; polyamide resins; elastomer resins, such as styrene resins, olefin resins, polyvinyl chloride (PVC) resins, urethane resins, ester resins, and amide resins; polyester resins; engineering plastics; polyethylene; polypropylene; nylon resins; acrylonitrile butadiene styrene (ABS) resins; acrylic resins; ethylene acrylate resins; ethylene-vinyl acetate resins; polystyrene resins; polyphenylene sulfide resins; polycarbonate resins; polyester elastomer resins; polyamide elastomer resins; liquid crystal polymers; polybutylene terephthalate resins; cellulose acetates; and polyvinyl acetates. One of the above-described resins may be used alone or a mixture of a plurality of resins that includes, as a main component, one of the above-described resins may be used.

Furthermore, the base material may include a thermosetting resin. Examples of the thermosetting resin include epoxy resins, unsaturated polyester resins, vinyl ester resins, phenolic resins, urethane resins, melamine resins, urea resins, maleimide resins, cyanate ester resins, alkyd resins, addition-curable polyimide resins, and thermosetting acrylic resins. The thermosetting resin may include one of the above-described resins or a mixture of a plurality of resins that includes, as a main component, one of the above-described resins. Accordingly, the heat resistance of resin molded body 1 can be enhanced.

Thus, since the molded body is resin molded body 1, it is suitable for laser processing. In particular, since resin molded body 1 includes a thermosetting resin, the heat resistance of resin molded body 1 can be enhanced.

Subsequently, laser processing is performed on the surface of the base material to form uneven structure surface 30. Specifically, uneven structure surface 30 is formed by performing laser processing on the surface of the base material to form the plurality of recesses 32 and the plurality of projections 31 that are alternately arranged at the predetermined pitch in the predetermined direction in a planar form. The surface of the base material is irradiated with a short pulse laser from a laser emitter that emits a laser. The pulse width of the short pulse laser is preferably less than or equal to a nanosecond. Here, laser processing is performed to form each projection 31 in the shape of an inverted truncated square pyramid by adjusting a parameter such as laser output, spot diameter, optical axis direction, scanning speed, scanning direction, and pulse width. Furthermore, the laser processing is preferably ablation processing. Ablation processing can reduce thermal damage to an object being processed. Furthermore, the cross-sectional shape of each of projection 31 and recess 32 can be made sharp.

[Advantageous Effects, etc.]

As described above, since projection 31 includes a base portion and a distal end portion that is larger than the base portion in uneven structure surface 30, liquid does not easily enter recess 32. Accordingly, liquid repellency derived from fine structure can be enhanced. Specifically, since liquid repellency can be enhanced without applying a fluorine coating, etc. to uneven structure surface 30, deterioration of liquid repellency due to fluorine coat deterioration does not occur. Accordingly, liquid repellency can be stably exhibited for a long time. Thus, resin molded body 1 having high liquid repellency can be provided.

Furthermore, because such resin molded body 1 is applied to wet-area equipment (bathroom 100), liquid repellency of wet-area equipment can be enhanced to have high quality.

Furthermore, the peripheral surface of projection 31 is in a shape in which the distance from the central axis to the edge of projection 31 gradually increases from the base portion toward the distal end portion. Accordingly, force F toward the distal end portion of projection 31 can be exerted on droplet L that has entered recess 32. Because of force F, droplet L in recess 32 tends to move toward the distal end portion of projection 31. In other words, droplet L tends to get out of recess 32, and thus high liquid repellency is maintained.

Here, a static pure-water contact angle of over 120° cannot be actually achieved from chemical properties. For example, even the static pure-water contact angle on a fluorine resin surface having a trifluoromethyl group that provides the highest pure-water contact angle cannot exceed 120°. However, a static pure-water contact angle of over 120° can be achieved from fine structure. Specifically, the static pure-water contact angle on each of first area 30a and second area 30b can exceed 120° because of fine structure of uneven structure surface 30. A static pure-water contact angle of over 120° causes water to be easily repelled. Accordingly, high water repellency (liquid repellency) that cannot be achieved from chemical properties alone can be achieved.

Furthermore, since first area 30a and second area 30b that have mutually different predetermined pitches are arranged in uneven structure surface 30, the static pure-water contact angle on first area 30a and the static pure-water contact angle on second area 30b can be made mutually different. Accordingly, droplets can be gathered from second area 30b to first area 30a that exhibits a comparatively low static pure-water contact angle. When a plurality of droplets are gathered into one drop, the drop easily slides off due to its increased weight, and thus the liquid repellency of uneven structure surface 30 can be enhanced.

Furthermore, since the static pure-water contact angle on first area 30a and the static pure-water contact angle on second area 30b are mutually different by at least 5°, the angle difference enables droplets to be gathered more smoothly from second area 30b to first area 30a that exhibits a comparatively low static pure-water contact angle.

Furthermore, since uneven structure surface 30 of resin molded body 1 is formed by laser processing, uneven structure surface 30 can be formed without using organic material or the like that tends to have an impact on the environment.

Furthermore, since the laser processing is ablation processing, the cross-sectional shape of each of projection 31 and recess 32 can be made sharp. Specifically, the peripheral surface of projection 31 can be formed in a smooth shape, and thus force F toward the distal end portion of projection 31 can be more reliably exerted on droplet L that has entered between a pair of adjacent projections 31. Because of force F, droplet L can more reliably get out of recess 32, and thus high liquid repellency can be exhibited.

[Embodiment 2]

In Embodiment 1, uneven structure surface 30 in which a plurality of projections 31 are arranged in a matrix is described as an example. In Embodiment 2, uneven structure surface 30A in which a plurality of projections 31a are arranged in stripes will be described as an example. It should be noted that, hereinafter, parts equivalent to the parts in Embodiment 1 are given the same reference signs and descriptions thereof may be omitted.

FIG. 5 is a plan view illustrating uneven structure surface 30A according to Embodiment 2. Specifically, FIG. 5 is a diagram corresponding to FIG. 2. As shown in FIG. 5, each of projections 31a and each of recesses 32a are formed in a linear shape. Each of projections 31a is formed in the shape of a trapezoid in which a distal end portion is larger than a base portion when viewed in a lengthwise direction. The plurality of projections 31a and the plurality of recesses 32a are alternately arranged at a predetermined pitch. In this case as well, uneven structure surface 30A can be made into a liquid-repellent surface as long as the above-described condition is satisfied. It should be noted that the recesses and the projections may be formed in any shape in a plan view, as long as they are alternately arranged at the predetermined pitch.

[Embodiment 3]

In Embodiment 1, a case where projection 31 is in the shape of an inverted truncated square pyramid is described as an example. However, it is sufficient that the peripheral surface of the projection is in a shape in which the distance from the central axis to the edge of the projection gradually increases from the base portion toward the distal end portion. In Embodiment 3, a case where the peripheral surface of the projection is convex will be described as an example.
FIG. 6 is an enlarged cross-sectional view of peripheral surfaces of projections 31b according to Embodiment 3. Specifically, FIG. 6 is a diagram corresponding to FIG. 4. As shown in FIG. 6, the peripheral surface of projection 31b is convex so as to project outward. In this case, as shown in FIG. 6, when droplet L enters between a pair of adjacent projections 31b, surface tension causes droplet L in recess 32b to be shaped to protrude toward the bottom surface of recess 32b. In droplet L, force F is generated along the tangent line of the surface of droplet L, on the peripheral surface of projection 31b.
Here, in FIG. 6, surface positions of droplet L according to the degree of entry of droplet L into recess 32b are shown. The surface position of droplet L when the degree of entry into recess 32b is shallowest is represented by L, and then L1 and L2, respectively, as the degree of entry increases. As shown in FIG. 6, since the peripheral surface of projection 31b is convex, as droplet L enters recess 32b more deeply as indicated by L, L1, and L2, force F changes so as to be increasingly inclined toward the distal end portion of projection 31b. Specifically, as droplet L enters recess 32b more deeply as indicated by L, L1, and L2, force F which is increasingly inclined toward the distal end portion of projection 31b is exerted on droplet L at surface positions L, L1, and L2, thereby causing a greater tendency to move toward the distal end portion of projection 31b. Accordingly, droplet L at any of surface positions L, L1, and L2 tends to easily get out of recess 32b, and thus high liquid repellency is exhibited.
It should be noted that the peripheral surface shape of projection 31b is a spherical shape because this can make the above-described change of force F more prominent.

[Other Embodiments]

In Embodiment 1, a case where each of projections 31 is in the shape of an inverted truncated square pyramid is described as an example; however, the shape of the projection can be any other shape as long as it has a flat distal end surface and a distal end portion that is larger than the base portion. Other shapes of the projection include an inverted polygonal frustum other than an inverted truncated square pyramid, an inverted truncated cone, and an inverted truncated elliptical cone.
Furthermore, in Embodiment 1, bathroom 100 is exemplified as wet-area equipment. However, wet-area equipment can be any equipment that may get wet. Other wet-area equipment includes, for example, equipment provided in a kitchen, a lavatory, a toilet, or a bathroom. Examples of equipment provided in a kitchen include a kitchen counter, a sink, a range hood, etc. Examples of equipment provided in a lavatory include a wash basin, a water tap, etc. Examples of equipment provided in a toilet include a toilet seat, a toilet bowl, etc. Examples of equipment provided in a bathroom include a bathtub, a bathroom door, etc. Furthermore, a wet-area equipment may be equipment that may get wet in a state of being disposed outdoors.
Furthermore, although resin molded body 1 is exemplified in the above-described embodiments, the resin molded body can be formed of any resin material on which laser processing can be performed.
The scope of the invention is defined by the appended claims.

[Reference Signs List]

1 resin molded body
30,30A uneven structure surface
30a first area
30b second area
31,31a,31b projection

32,32a,32b recess
100 bathroom (wet-area equipment)
τ pitch

Claims

1. A resin molded body (1) comprising:

an uneven structure surface (30, 30A) that exhibits liquid repellency by having a plurality of recesses (32, 32a, 32b) and a plurality of projections (31, 31a, 31b) alternately arranged in a predetermined direction in a planar form; wherein
each of the projections (31, 31a, 31b) includes a base portion and a distal end portion that is larger than the base portion, and
each of the projections (31, 31a, 31b) includes a peripheral surface in a shape in which a distance from a central axis to an edge of the projection (31, 31a, 31b) gradually increases from the base portion toward the distal end portion;
**characterized in that**:
the peripheral surface of the projection (31, 31a, 31b) is spherical.

2. The resin molded body (1) according to claim 1, wherein
the uneven structure surface (30, 30A) exhibits a static pure-water contact angle of over 120 degrees.

3. The resin molded body (1) according to claim 1 or 2, wherein

the plurality of recesses (32, 32a, 32b) and the plurality of projections (31, 31a, 31b) are alternately arranged at a predetermined pitch in the predetermined direction, and
the uneven structure surface (30, 30A) includes a plurality of areas (30a, 30b) that have mutually different predetermined pitches each of which is the predetermined pitch.

4. The resin molded body (1) according to claim 3, wherein
in the uneven structure surface (30, 30A), the plurality of areas (30a, 30b) that have the mutually different predetermined pitches exhibit static pure-water contact angles that are mutually different by at least 5 degrees as determined with the method presented in the description.

5. A method for producing the resin molded body (1) according to any one of claims 1 to 4, the method comprising:
forming the uneven structure surface (30, 30A) by performing laser processing on a surface of a resin base material.

6. The method for producing the resin molded body (1) according to claim 5, wherein
the laser processing is ablation processing using a pulsed laser.

7. Wet-area equipment comprising:
the resin molded body (1) according to any one of claims 1 to 4.

Patentansprüche

1. Harzformkörper (1), aufweisend:

eine unebene Strukturfläche (30, 30A), die Flüssigkeitsabweisung aufweist, indem sie mehrere Vertiefungen (32, 32a, 32b) und mehrere Vorsprünge (31, 31a, 31b) hat, die abwechselnd in einer vorbestimmten Richtung in einer ebenen Form angeordnet sind; wobei
jeder der Vorsprünge (31, 31a, 31b) einen Basisabschnitt und einen distalen Endabschnitt aufweist, der größer ist als der Basisabschnitt, und
jeder der Vorsprünge (31, 31a, 31b) eine Umfangsfläche in einer Gestalt aufweist, bei der ein Abstand von einer Mittelachse zu einer Kante des Vorsprungs (31, 31a, 31b) von dem Basisabschnitt zu dem distalen Endabschnitt hin allmählich zunimmt;
**dadurch gekennzeichnet, dass**:

die Umfangsfläche des Vorsprungs (31, 31a, 31b) sphärisch ist.

2.  Harzformkörper (1) nach Anspruch 1, wobei
    die unebene Strukturfläche (30, 30A) einen statischen Kontaktwinkel mit reinem Wasser von über 120 Grad aufweist.

3.  Harzformkörper (1) nach Anspruch 1 oder 2, wobei

    die mehreren Vertiefungen (32, 32a, 32b) und die mehreren Vorsprünge (31, 31a, 31b) abwechselnd in einer vorbestimmten Teilung in der vorbestimmten Richtung angeordnet sind und
    die unebene Strukturfläche (30, 30A) mehrere Bereiche (30a, 30b) aufweist, die wechselseitig unterschiedliche vorbestimmte Teilungen aufweisen, von denen jede die vorbestimmte Teilung ist.

4.  Harzformkörper (1) nach Anspruch 3, wobei
    in der unebenen Strukturfläche (30, 30A) die mehreren Bereiche (30a, 30b), die die wechselseitig unterschiedlichen vorbestimmten Teilungen aufweisen, statische Kontaktwinkel mit reinem Wasser aufweisen, die sich wechselseitig um mindestens 5 Grad unterscheiden, wie mit dem in der Beschreibung dargelegten Verfahren bestimmt.

5.  Verfahren zur Herstellung des Harzformkörpers (1) nach einem der Ansprüche 1 bis 4, wobei das Verfahren umfasst:
    Bilden der unebenen Strukturfläche (30, 30A) durch Ausführen einer Laserbearbeitung an einer Fläche eines Harzgrundmaterials.

6.  Verfahren zur Herstellung des Harzformkörpers (1) nach Anspruch 5, wobei
    die Laserbearbeitung eine Ablationsbearbeitung unter Verwendung eines gepulsten Lasers ist.

7.  Ausrüstung für Nassbereiche, aufweisend:
    den Harzformkörper (1) nach einem der Ansprüche 1 bis 4.

**Revendications**

1.  Corps moulé en résine (1) comprenant :

    une surface de structure irrégulière (30, 30A) qui présente une résistance aux liquides en ayant une pluralité d'évidements (32, 32a, 32b) et une pluralité de saillies (31, 31a, 31b) disposées en alternance dans une direction prédéterminée sous une forme plane ; dans lequel
    chacune des saillies (31, 31a, 31b) comprend une partie de base et une partie d'extrémité distale qui est plus grande que la partie de base, et
    chacune des saillies (31, 31a, 31b) comprend une surface périphérique dans une forme dans laquelle une distance d'un axe central à un bord de la saillie (31, 31a, 31b) augmente progressivement depuis la partie de base vers la partie d'extrémité distale ;
    **caractérisé en ce que** :
    la surface périphérique de la saillie (31, 31a, 31b) est sphérique.

2.  Corps moulé en résine (1) selon la revendication 1, dans lequel
    la surface de structure irrégulière (30, 30A) présente un angle de contact statique avec l'eau pure supérieur à 120 degrés.

3.  Corps moulé en résine (1) selon la revendication 1 ou 2, dans lequel

    la pluralité d'évidements (32, 32a, 32b) et la pluralité de saillies (31, 31a, 31b) sont disposées en alternance selon un pas prédéterminé dans la direction prédéterminée, et
    la surface de structure irrégulière (30, 30A) comprend une pluralité de zones (30a, 30b) qui ont des pas prédéterminés mutuellement différents, chacun d'entre eux étant le pas prédéterminé.

4.  Corps moulé en résine (1) selon la revendication 3, dans lequel
    dans la surface de structure irrégulière (30, 30A), la pluralité de zones (30a, 30b) qui ont les pas prédéterminés mutuellement différents présentent des angles de contact statiques avec l'eau pure qui sont mutuellement différents d'au moins 5 degrés comme déterminé selon la méthode présentée dans la description.

5. Procédé de production du corps moulé en résine (1) selon l'une quelconque des revendications 1 à 4, le procédé comprenant :
la formation de la surface de structure irrégulière (30, 30A) par réalisation d'un traitement au laser sur une surface d'un matériau de base en résine.

6. Procédé de production du corps moulé en résine (1) selon la revendication 5, dans lequel
le traitement au laser est un traitement d'ablation utilisant un laser pulsé.

7. Équipement pour zones humides comprenant :
le corps moulé en résine (1) selon l'une quelconque des revendications 1 à 4,

# FIG. 1

FIG. 2

FIG. 3

# FIG. 4

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019188605 A

- WO 2015021192 A1